# EUROPEAN PATENT APPLICATION

(11) **EP 2 662 959 A2**
(43) Date of publication of application: **13.11.2013**
(21) Application number: 13002488.8
(22) Date of filing: 10.05.2013
(51) Int. Cl.: H02K 9/18

(54) **Rotating electric machine**

(30) Priority: 11.05.2012 JP 2012109925
(71) Applicant: Hitachi, Ltd., Tokyo 100-8280 (JP)
(72) Inventor: Tounosu, Shigeki, Tokyo 100-8220 (JP); Hattori, Kenichi, Tokyo 100-8220 (JP); Sekiya, Kenji, Tokyo 100-8220 (JP); Meng, De, Tokyo 100-8220 (JP)
(74) Representative: Strehl Schübel-Hopf & Partner

(57) **Abstract**

A rotating electric machine (11A) includes a rotor (17), a stator (15), formed by stacking perforated-disk-shape stator cores(33), surrounding the rotor (17), arranged with a gap from the rotor (17), a first stator cooling duct (35a) to allow the cooling gas to flow from an inner side toward outer side of the stator (15), a second stator cooling duct (35b) to allow the cooling gas to flow from an outer side to an inner side of the stator (15), a plurality of support plates (47) for supporting the stator (15) and providing sectioning between the first and second flow paths, and a flow control part (53) configured to suppress a flow of the cooling gas passing through the gap part (51) where the outer end part (33a) of the stator core (33) and the inner end part (47a) of the support plate (47) face each other.

## Description

### BACKGROUND OF THE INVENTION

### 1. Field of the Invention

The present invention relates to a rotating electric machine such as a turbine generator.

### 2. Description of the Related Art

Generally, a rotating electric machine such as a turbine generator is provided with a flow path for the air and a hydrogen gas as a cooling gas (cooling medium) near a stator and a rotor to circulate the cooling gas through the flow path to cool coils and a core where heat is generated due to a Joule loss or an iron loss.

JP 2000-333414 A is known as a technology in which a temperature profile in rotating electric machine is leveled.

JP 2000-333414 A discloses an rotating electric machine provided with a first heat exchanger on a first flow path extending from an outside of a fan fixed to a rotating shaft via an iron core to an inlet side of the fan as well as a second heat exchanger on a second flow path branching from the first flow path to further cool a part of the cooling gas, having cooled by the first heat exchanger, with the second heat exchanger.

In the technology disclosed in JP 2000-333414 A, a multi-flow system is adopted as a flowing system of the cooling gas (see paragraph [0023] in JP 2000-333414 A). The multi-flow system is a system for ventilation of the cooling gas in both directions, i.e., toward an inner diameter side and toward an outer diameter side of the stator, through the first flow path extending from an inner side of the stator to an outer side of the stator and through the second flow path extending from the outer side of the stator to the inner side of the stator, respectively.

However, in the multi-flow system, a cooling performance of the rotating electric machine may be decreased.

More specifically, a gap is formed between an outer circumference of the stator core and an inner circumference of a support plate (for supporting the stator at a stator frame and providing a partition between the first and second flow paths in an axial direction of the rotor). This is provided to avoid interference between the stator core and the supporting plate in manufacturing the rotating electric machine. The gap is communicated between the first and second flow paths. Accordingly, through the gap, for example, a part of the cooling gas flowing through the second flow path can leak to the first flow path. In such a case, a flow rate of the cooling gas in the second flow path may decrease. As a result, the cooling performance of the rotating electric machine may be decreased.

### [SUMMARY OF THE INVENTION]

The present invention has been developed in consideration of the above-described circumferences, and aims to maintain a cooling performance of a rotating electric machine maintained at a high level.

To achieve the aim, the rotating electric machine according to the present invention, comprises:
a rotor rotating on an axis;
a stator, disposed apart from the rotor with a gap to surround the rotor, formed by stacking a plurality of perforated-disk-shape stator cores;
a first flow path configured to allow the cooling gas to flow from an inner side of the stator to an outer side of the stator;
a second flow path configured to allow the cooling gas to flow from the outer side of the stator to the inner side of the stator;
a plurality of perforated-disk-shape support plates configured to support the stator and provide a partition in the axial direction between the first flow path and the second flow path; and
a flow control part configured to control ventilation of the cooling gas passing through a gap part where an outer end part of the stator core and an inner end part of the support plate face each other.

The rotating electric machine according to the present invention can maintain the cooling performance at a high level.

### [BRIEF DESCRIPTION OF THE DRAWINGS]

Fig. 1A is a vertical cross section view illustrating an outline structure of a rotating electric machine according to a first embodiment of the present invention, wherein a left upper portion of the rotating electric machine is shown.
Fig. 1B is an enlarged view of a part around a stator core of the rotating electric machine according to the first embodiment shown in Fig. 1A.
Fig. 1C is an enlarged lateral cross section view, viewed from an axial direction, to illustrate a mounting state of the stator core on a support plate.
Fig. 1D is an enlarged view of a part around the stator core of the rotating electric machine according to the first embodiment shown in Fig. 1A.
Fig. 2A is a chart illustrating comparison between the first embodiment and a comparative example regarding a flow rate distribution in an axial direction in a stator cooling duct.
Fig. 2B is a chart illustrating comparison between the first embodiment and a comparative example with respect to a temperature profile in the axial direction in the iron core.
Fig. 3 is an elevation cross section view illustrating a flow control configuration in a gap part of the rotating electric machine according to a second embodiment of the present invention.
Figs. 4A to 4D are illustrations illustrating a process of assembling the stator core to a stator frame in the rotating electric machine according to the second embodiment shown in Fig. 3.
Fig. 5 is an elevation cross section view of a flow control structure in the gap part of the rotating electric machine according to a modification of the second embodiment of the present invention.
Fig. 6 is an elevation cross section view of a flow control structure in the gap part of the rotating electric machine according to a third embodiment of the present invention.
Fig. 7A an elevation cross section view of a flow control structure in the gap part of the rotating electric machine according to a fourth embodiment of the present invention.
Fig. 7B is an enlarged cross section view of the flow control structure in the gap part shown in Fig. 7A.
Fig. 8A is an elevation cross section view of a flow control structure of the gap part in the rotating electric machine according to a fifth embodiment of the present invention.
Fig. 8B is an enlarged cross section view of the flow control structure in the gap part shown in Fig. 8A.
Fig. 9A is an elevation cross section view of a flow control structure in the gap part of the rotating electric machine according to a modification from the fifth embodiment of the present invention.
Fig. 9B is an enlarged cross section view of the ventilation suppression structure in the gap part shown in Fig. 9A.
Fig. 10 is an elevation cross section view of a flow control structure of the gap part in the rotating electric machine according to a sixth embodiment of the present invention.
Fig. 11 is an elevation cross section view of a flow control structure in the gap part of the rotating electric machine according to a modification of the sixth embodiment of the present invention.

### [EMBODIMENTS]

Hereinbelow with reference to drawings will be described embodiments of the rotating electric machine according to the present invention.

### [Structure of rotating electric machine 11A according to first embodiment of present invention]

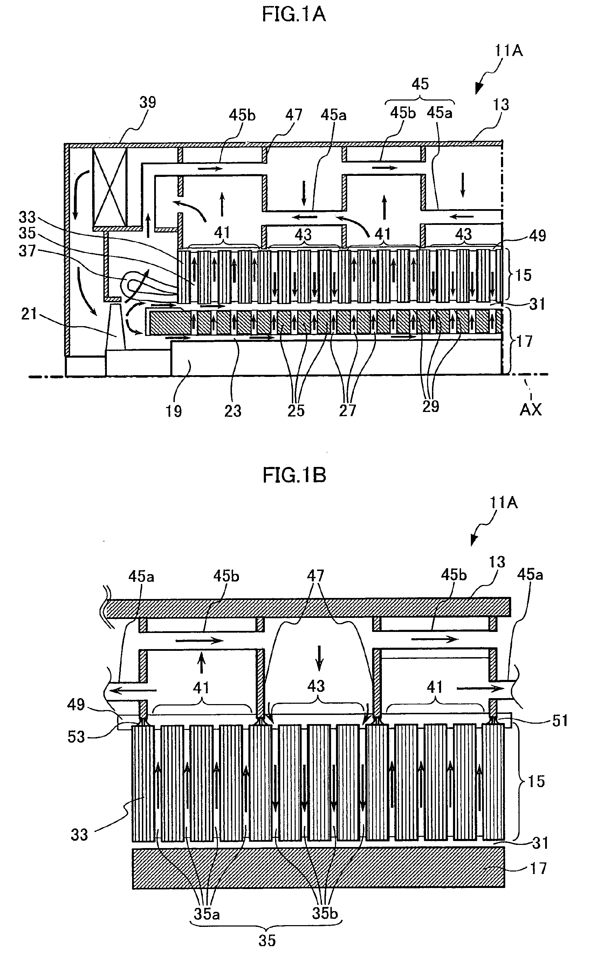

At first, with reference to Fig. 1A to 1D will be described the rotating electric machine 11A according to the first embodiment of the present invention. Fig. 1A is an elevation cross section view illustrating an outline configuration of the rotating electric machine 11A according to the first embodiment of the present invention. Fig. 1B is an enlarged view of a part around a stator core of the rotating electric machine according to the first embodiment shown in Fig. 1A.

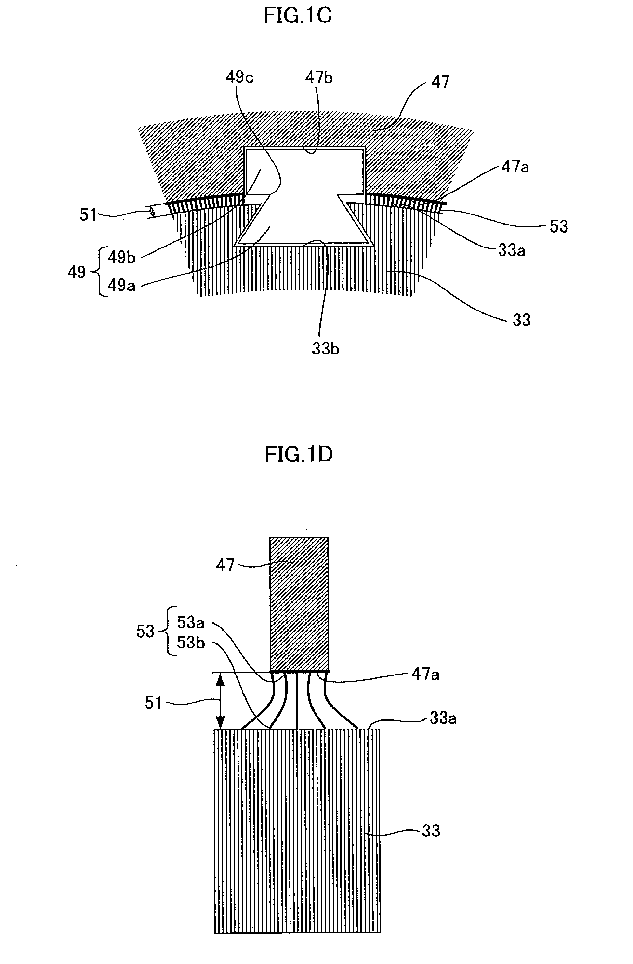

Fig. 1C is an enlarged lateral cross section view, viewed from an axial direction, to illustrate a mounting state of the stator core on a support plate.

Fig. 1D is a further enlarged view of a part around the stator core of the rotating electric machine according to the first embodiment shown in Fig. 1A.

The rotating electric machine 11A according to the first embodiment of the present invention is, for example, a radial flow cooling type of turbine generator in which respective parts within the rotating electric machine 11A are cooled by allowing the air or a hydrogen gas to flow mainly in a diametrical direction as a cooling gas charged in the device.

The rotating electric machine 11A includes, as shown in Fig. 1A, a stator frame 13, a stator 15, a rotor 17, the rotor shaft 19, an axial flow fan 21, sub-slots 23, the field coil 25, a radial flow path 27, outlet holes 29, an air gap 31, a stator core (core) 33, stator cooling ducts 35, a stator coil 37, a heat exchanger 39, a forward zone 41 (corresponding to a part of the first flow path according to the present invention), a reverse zone 43 (corresponding to a part of the second flow path according to the present invention), flow pipes 45, support plates 47, and a connection stick 49.

The stator frame 13 supports, as shown in Fig. 1A, the stator 15 through the support plate 47 and the connection stick 49. The stator 15 includes the stator core (core) 33 having a substantially circular sleeve shape and the stator coil 37 which is an electric conductor for the stator 15. Provided on an inner diameter side of the stator 15 is the rotor 17 around the rotor shaft 19. At an end of the rotor shaft 19 there is the axial flow fan 21.

The axial flow fan 21 has a function of delivering the cooling gas (for example, the air, a hydrogen gas, etc.).

The rotor 17 has the sub-slot 23, the field coil 25 which is a current-carrying conductor of the rotor 17, the radial flow path 27, and the outlet hole 29. The sub-slot 23 is a flow passage for introducing the coolant (for example, the air, and hydrogen) into the rotor 17. In addition, the radial flow paths 27 are radial-direction flow paths for introducing the cooling gas supplied through the sub-slot 23. The outlet holes 29 provided on an outer circumferential surface of the rotor 17 have a function for discharging the cooling gas supplied through the radial flow paths 27.

Between an inner circumferential surface of the stator 15 and an outer circumferential surface of the rotor 17 there is the air gap 31. In addition, a plurality of stator cooling ducts (corresponding to a part of the first and second flow paths) 35, which are flow paths for the cooling gas radially extending in a diametrical direction are formed in the axial direction with a predetermined gap. The heat exchanger 39 has a function of cooling the cooling gas having been heated during being used for cooling heat sources such as the stator core 33 and the stator coil 37.

The stator cooling duct 35 is, as shown in Fig. 1B, configured with first stator cooling ducts 35a belonging to the forward zone (corresponding to a part of the first flow path according to the present invention) 41 and second stator cooling ducts 35b belonging to the reverse zone (corresponding to a part of the second flow path according to the present invention) 43.

The forward zone 41 is a region for allowing the cooling gas to flow from the inner diameter side toward the outer diameter side. In contrast, the reverse zone 43 is a region for allowing the cooling gas to flow from the outer diameter side toward the inner diameter side. Here, an example structure will be shown in Fig. 1B in which the forward zone 41 and the reverse zone 43 are alternately formed along the axial direction AX.

A first flow pipe 45a is provided between each pair of the forward zones 41 adjoining each other for communication between these zones. On the other hand, a second flow pipe 45b is provided between each pair of the reverse zones 43 adjoining each other for communication between these zones. In addition, the stator frame 13 is provided with the support plates 47, disposed in the axial direction AX with a gap, for supporting the stator 15 and providing a partition between the forward zone 41 and the reverse zone 43. The stator 15 is connected to the support plates 47 through the connection stick 49 as described later.

More specifically, the connection stick 49 is, as shown in Fig. 1C, a longitudinal rod member having the substantially trapezoid part 49a on a cross section thereof and a substantially rectangular part 49b on the cross section thereof. Both sides of the connection stick 49 connecting the substantially trapezoid part 49a and the substantially rectangular part 49b, as shown in Fig. 1C, a constricted part 49c having a wedge shapes on the cross section is formed.

In an outer end part 33a of the stator core 33, as shown in Fig. 1C, there is a key groove 33b formed, into which the substantially trapezoid part 49a of the connection stick 49 is fitted. On the other hand, in an inner end part 47a of the support plate 47, there is a key groove 47b formed, into which the substantially rectangular part 49b of the connection stick 49 is fitted. The substantially trapezoid part 49a of the connection stick 49 is fitted into the key groove 33b formed in the outer end part 33a of the stator core 33. On the other hand, the substantially rectangular part 49b of a connection stick 49 is fitted into the key groove 47b formed in the inner end part 47a of the support plate 47. Accordingly the stator 15 is connected to the support plate 47 through the connection stick 49.

As shown in Fig. 1C and Fig. 1D, a gap part 51 is formed between the outer end part 33a of the stator core 33 and the inner end part 47a of the support plate 47. This is provided to avoid interference (collision) between the stator core 33 and the support plate 47 during manufacturing the rotating electric machine 11A. As shown in Fig. 1B, the forward zone (first flow path) 41 is communicated with the reverse zone (a second flow path) 43 through the gap part 51.

If the gap part 51 is left as it is, for example, a trouble may occur in which a part of the cooling gas flowing through the reverse zone (second flow path) 43 leaks to the forward zone (first flow path) 41 through the gap part 51. In such a case, a flow rate of the cooling gas in the reverse zone (second flow path) 43 may decrease. As a result, this may decrease a cooling performance of the rotating electric machine 11A.

The rotating electric machine 11A according to the first embodiment is, as shown in Fig. 1D, provided with a brush-form structure (corresponding to "flow control part of the present invention) 53 to control the ventilation of cooling gas flowing through the gap part 51 to block the gap part 51 where the outer end part 33a of the stator core 33 and the inner end part 47a of the support plate 47 face each other.

As the brush-form structure 53, though not specifically limited, for example, a member made of a resin with an electrical insulation characteristic is preferably used. As the brush-form structure 53, when the member having an electrical insulation performance is adopted, an advantageous effect to control a disturbance of magnetic flux in the outer end part 33a of the stator core 33 can be expected.

More specifically, the brush-form structure 53 includes, as shown in Fig. 1D, a mounting part 53a and a contact 53b. The mounting part 53a is provided on the inner end part 47a of the support plate 47. On the other hand, the contact 53b is provided so as to contact the outer end part 33a of the stator core 33. This blocks with the brush-form structure 53 the ventilation of the cooling gas, which originally flows through the gap part 51.

### [Operation and advantageous effect of rotating electric machine 11A according to first embodiment of present invention]

In the rotating electric machine 11A according to the first embodiment, when the rotor 17 rotates, the cooling gas flows into the sub-slot 23 by a pushing action by an axial fan 21 and a pumping action due to a centrifugal force in the radial flow path 27. In addition, a part of the cooling gas delivered by the axial flow fan 21 flows into the air gap 31 and an end part of the stator coil 37.

The cooling gas flowing into the sub-slot 23 is, as shown with arrows in Fig. 1A, successively branched to each of the radial flow paths 27 while the cooling gas is flowing toward a middle of the rotor 17 in the axial direction (in a right hand direction in Fig. 1A). The cooling gas branched into each of the radial flow paths 27 cools the field coil 25 of the rotor 17 and after that, is exhausted into the air gap 31 through the outlet hole 29.

On the other hand, the cooling gas flowing in a direction toward the end part of the stator coil 37 flows into the second stator cooling duct 35b belonging to the reverse zone 43 through the second ventilation pipe 45b, as shown by arrows in Fig. 1A. The cooling gas having flowed into the second stator cooling duct 35b is exhausted into the air gap 31 after cooling the stator core 33 and the stator coil 37.

The cooling gas having cooled the field coil 25 of the rotor 17 and the cooling gas having cooled the stator core 33 and the stator coil 37 are combined in the air gap 31. The cooling gas combined as described above flows into the first stator cooling duct 35a belonging to the forward zone 41 as shown with arrows in Fig. 1A.

The cooling gas flowing into the first stator cooling duct 35a flows into the heat exchanger 39 through the first flow pipe 45a after cooling the stator core 33 and the stator coil 37. More specifically, the cooling gas heated due to being used for cooling (heat exchange) heat sources such as the stator core 33 and the stator coil 37 is introduced into the heat exchanger 39 to be cooled and then returned to the axial flow fan 21. The above is a flow of the cooling gas in the rotating electric machine 11A according to the first embodiment which adopts the multi-flow system.

Next, a cooling effect in the rotating electric machine 11A according to the first embodiment is compared with a cooling effect in the rotating electric machine in a comparative example (not shown) without the brush-form structure 53 (other structures are the same as those according to the first embodiment).

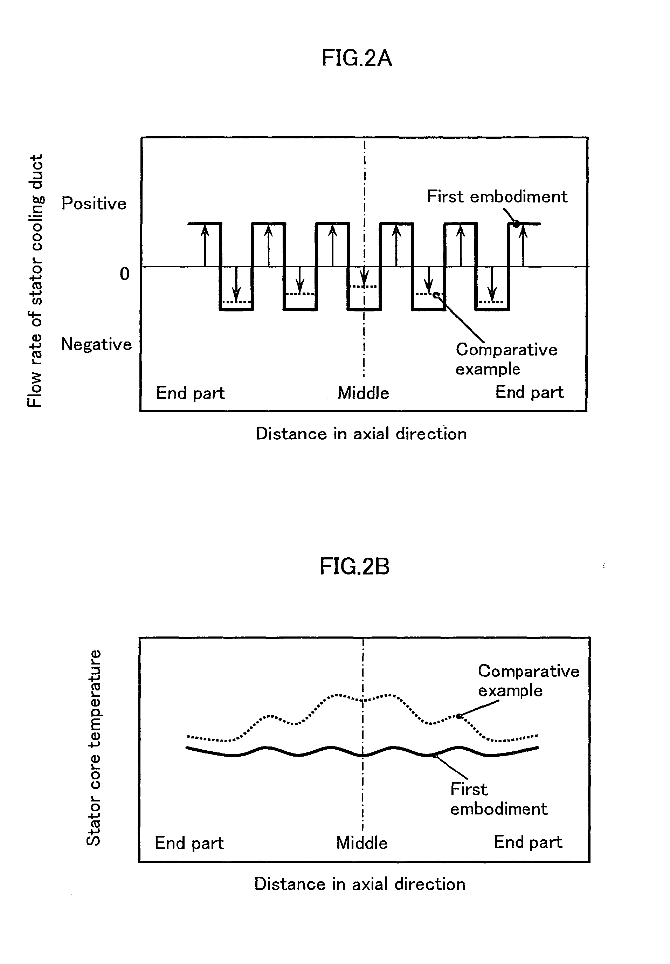

Fig. 2A is a chart illustrating comparison between the first embodiment and the comparative example regarding a flow rate distribution in the stator cooling duct 35.

Fig. 2B is a chart illustrating comparison between the first embodiment and the comparative example with respect to a temperature profile in the axial direction in the stator core 33.

In the rotating electric machine 11A according to the first embodiment, the brush-form structure 53 for suppressing flow of the cooling gas flowing through the gap part 51 so as to block the gap part 51. Accordingly, the brush-form structure 53 can block the ventilation of the cooling gas through the gap part 51.

On the other hand, the rotating electric machine of the comparative example without the brush-form structure 53 corresponding to "flow control part" according to the present invention cannot control the ventilation of the cooling gas flowing through the gap part 51. As a result, when the ventilation of the cooling gas through the gap part 51 occurs, as shown with the break line in Fig. 2A, a flow rate of the cooling gas in the reverse zone (second flow path) 43 decreases as a location where the flow rate is measured approaches the middle in the axial direction. Then, as shown with the broken line in Fig. 2B, a temperature of the stator core 33 in the reverse zone 43 increases.

In addition, as increase in the temperature of the stator core 33 in the reverse zone (second flow path) 43, the temperature of the stator core 33 in the forward zone (first flow path) 41 also indicates a trend of a temperature increase. As a result, the temperature of the whole of the stator core 33 may increase.

Regarding this, because the rotating electric machine 11A according to the first embodiment can block the ventilation of the cooling gas flowing through the gap part 51 with the brush-form structure 53, flow rates of the cooling gas in the reverse zone (second flow path) 43 can be substantially equalized as shown with the solid line in Fig. 2A. As a result, as shown with a solid line in Fig. 2B, the temperature of the stator core 33 in the reverse zone 43 can be substantially equalized and a maximum temperature of the stator core 33 can be reduced to a low value.

According to the rotating electric machine 11A of the first embodiment, the brush-form structure 53 blocks the ventilation of the cooling gas flowing through the gap part 51, so that the cooling performance of the rotating electric machine 11A can be maintained at a high level. In addition, as the brush-form structure 53 is provided on a side of the support plate 47 (for example, at the inner end part 47a of the support plate 47), there is no possibility to decrease a work efficiency in manufacturing process for stacking the stator core 33.

In addition, because the rotating electric machine 11A according to the first embodiment adopts the structure for circulating the cooling gas through the stator 15 and the rotor 17, the rotor 17 is also affected by the cooling performance for the stator 15. As a result, the rotating electric machine 11A according to the first embodiment, an increase in the cooling performance for the rotor 17 can be expected.

### [Structure of rotating electric machine 11B according to second embodiment]

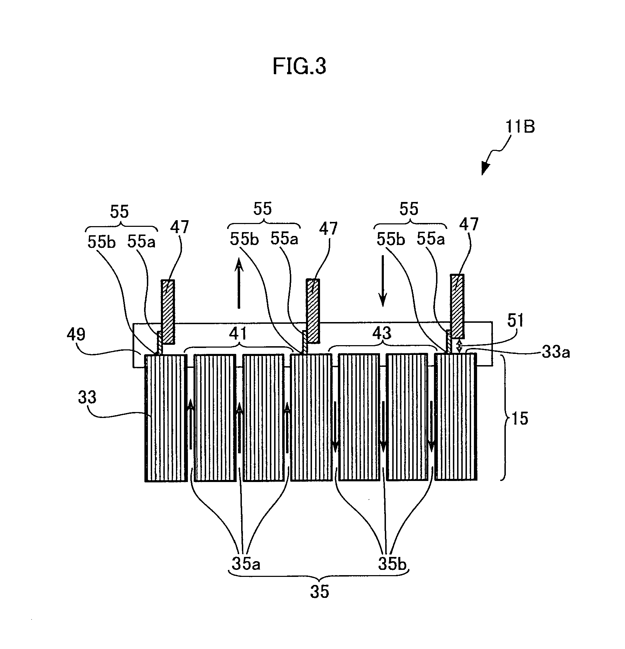

Next, with reference to Fig. 3 below will be described the rotating electric machine 11B according to the second embodiment of the present invention. Fig. 3 is an elevation cross section view illustrating a flow controlling configuration in the gap part 51 of the rotating electric machine 11B according to the second embodiment of the present invention.

There are common components between the rotating electric machine 11A according to the first embodiment of the present invention and the rotating electric machine (including a rotating electric machine 11B1 according to a modification of the second embodiment) 11B. Then, the substantially common components between the first and second embodiments are designated with the common references, and thus descriptions on these components will be omitted, and difference points will be mainly described below.

The difference between the rotating electric machine 11A according to the first embodiment (see Fig. 1B) and the rotating electric machine 11B (see Fig. 3) according to the seconded embodiment is in the structure of the flow control part according to the present invention. More specifically, in the rotating electric machine 11A according to the first embodiment, the brush-form structure 53 is adopted as the flow control part according to the present invention. On the other hand, in the rotating electric machine 11B according to the second embodiment, a flat-plate-shape structure 55 is adopted as the flow control part according to the present invention.

The flat-plate-shape structure 55 is, as shown in Fig. 3, a mounting part 55a is provided on the outer end part 33a of the stator core 33. On the other hand, a contact part 55b is provided to have contact with the support plate 47. Accordingly, the flat-plate-shape structure 55 is configured to contacts a surface of the support plate 47 extending in the axial direction.

The rotating electric machine 11B according to the second embodiment can maintain the cooling performance of the rotating electric machine 11B at a high level because the flat-plate-shape structure 55 blocks the ventilation of the cooling gas flowing through the gap part 51.

### [Assembling process of stator core 33 in rotating electric machine 11B according to second embodiment]

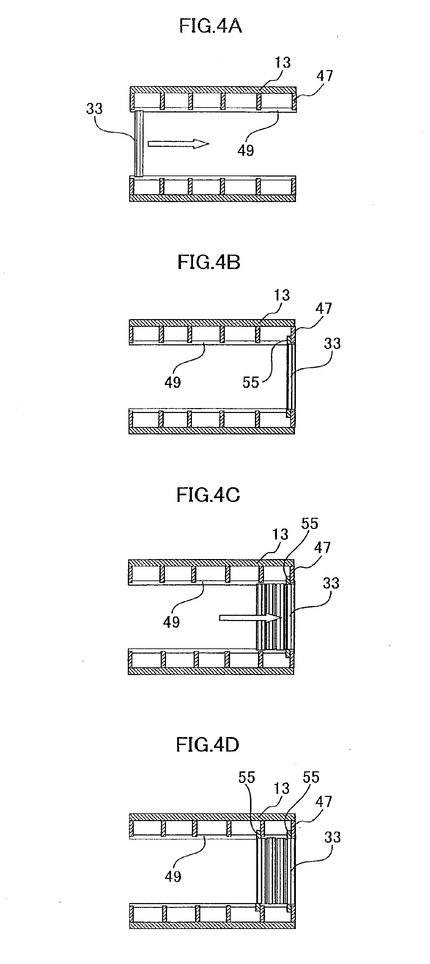

Next, an assembling process of the stator core 33 into the stator frame 13 in the rotating electric machine 11B according to the second embodiment will be described below with reference to Figs. 4A to 4D. Figs. 4A to 4D are illustrations illustrating the assembling process for the stator core 33 to a stator frame 13 in the rotating electric machine 11B according to the second embodiment.

In the rotating electric machine 11B according to the second embodiment, the flat-plate-shape structure 55 is provided at the outer end part 33a of the stator core 33 in manufacturing the stator 15 which is assembled by stacking the stator core 33. More specifically, in the rotating electric machine 11B according to the second embodiment, when the stator core 33 is assembled into the stator frame 13, as shown in Fig. 4A, first, the stator core 33 in a perforated disk shape is inserted into the stator frame 13 along the axial direction with fitting in and through the connection stick 49 supported through the stator frame 13 and the support plate 47.

When a lamination thickness of the stator core 33 reaches around the support plate 47, as shown in Fig 4B, the flat-plate-shape structure 55 is fixed to the outer end part 33a of the stator core 33 by welding, etc.

Next, as shown in Fig .4B, an inserting process is made by inserting the stator core 33 in the perforated disk shape is inserted into the stator frame 13 in the axial direction with fitting into and through the connection stick 49.

When the lamination thickness of the stator core 33 reaches around the next support plate 47, as shown in Fig 4D, the flat-plate-shape structure 55 is fixed to the outer end part 33a of the stator core 33. The process above is repeated to form the stator 15 having a predetermined length (for example, 10 m). According to the assemble process, the flat-plate-shape structure 55 can be assembled into the outer end part 33a of the stator core 33 at a predetermined location.

### [Outline of rotating electric machine 11B1 according to modification of second embodiment]

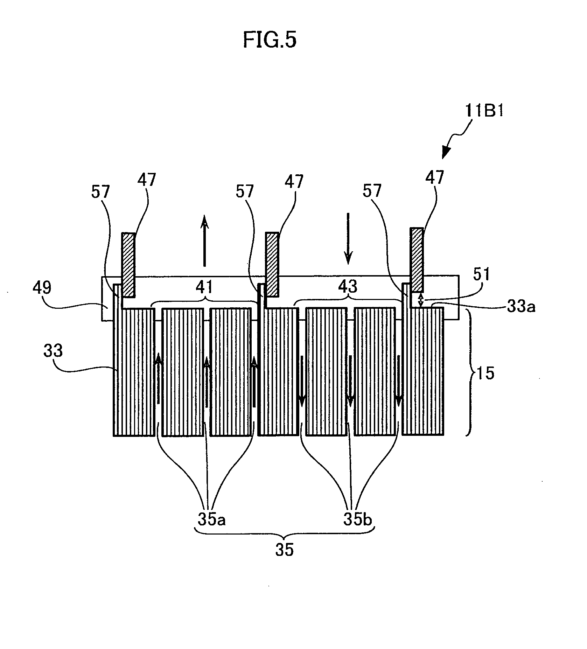

Next, with reference to Fig. 5, will be described blow the rotating electric machine 11B1 according to a modification from the second embodiment of the present invention.

Fig. 5 is an elevation cross section view of a flow control structure in the gap part 51 of the rotating electric machine 11B1 according to a modification of the second embodiment of the present invention.

A difference between the rotating electric machine 11B (see Fig. 3) according to the second embodiment and the rotating electric machine 11B1 (see Fig. 5) according to the modification of the second embodiment is in the structure of the flow control part according to the present invention. More specifically, in the rotating electric machine 11B according to the second embodiment, the structure is adopted in which the flat-plate-shape structure 55 which is a flow control part according to the present invention is fixed to the outer end part 33a of the stator core 33. On the other hand, in the rotating electric machine 11B1 according to the modification of the second embodiment, the flat-plate-shape structure 55 is configured with a projection 57 having a size larger than a predetermined size out of the stator cores 33 of which outer diameter size is made greater than the predetermined size.

In other words, the rotating electric machine 11B according to the second embodiment, the flat-plate-shape structure 55 and the stator core 33 are members separated from each other. On the other hand, in the rotating electric machine 11B according to the modification of the second embodiment, the flat-plate-shape structure 55 (the projection 57) and the stator core 33 are integrally formed.

In the rotating electric machine 11B1 according to the modification of the second embodiment, as shown in Fig. 5, a part having a size greater than the predetermined size (the projection 57) out of the stator core 33 having a greater diameter is used as the flat-plate-shape structure 55 by combining two kinds of the stator cores 33 having outer diameters different from each other. The outer diameter of the stator core 33 having a greater diameter size is set to be greater than the outer diameter of the stator core 33 having the predetermined size and an inner diameter of the support plate 47.

### [Assembling process of the stator core 33 in the rotating electric machine 11B1 according to the modification of the second embodiment]

The second embodiment and the modification of the second embodiment are similar to each other in the assembling process of the stator core 33 into the stator frame 13. However, there is a process different from each other in the assembling process described above. More specifically in the second embodiment, when the lamination thickness of the stator core 33 reaches around the support plate 47, as shown in Figs. 4A and 4D, the flat-plate-shape member 55 is fixed to the outer end part 33a of the stator core 33 by welding, etc. On the other hand, the modification of the second embodiment is different from the second embodiment in that, instead of the stator core 33 having a prescribed size, a stator core 33 having a larger diameter size is inserted into the stator frame 13 through the connection stick 49 along the axial direction AX in the stator frame 13.

According to the assembling process of the stator core 33 in the rotating electric machine 11B1 in the modification of the second embodiment, the process of mounting the flat-plate-shape structure 55 to the outer end part 33a of the stator core 33 can be omitted. As a result, according to the modification of the second embodiment, the manufacturing process can be simplified.

### [Structure of rotating electric machine 11C according to third embodiment of present invention]

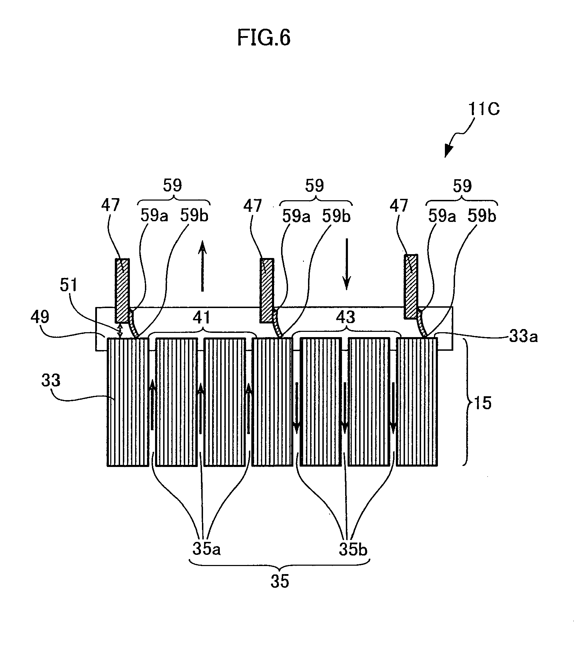

Next, the rotating electric machine 11C according to the third embodiment of the present invention will be described below with reference to Fig. 6. Fig. 6 is an elevation cross section view of a ventilation suppression structure in the gap part 51 of the rotating electric machine 11C according to the third embodiment of the present invention.

There are common components between the rotating electric machine 11A according to the first embodiment of the present invention and the rotating electric machine 11C according to the third embodiment. The substantially common components between the first and third embodiments are designated with the common references, and thus descriptions on these components will be omitted, and difference points will be mainly described.

The difference between the rotating electric machine 11A according to the first embodiment (see Fig. 1B) and the rotating electric machine 11C according to the third embodiment is in the structure of the flow control part according to the present invention. More specifically, in the rotating electric machine 11A according to the first embodiment, the brush-form structure 53 is adopted as the flow control part according to the present invention. On the other hand, in the rotating electric machine 11C according to the third embodiment, a leaf-spring structure 59 is adopted as the flow control part according to the present invention.

The leaf-spring structure 59 is provided of which a mounting part 59a is fixed to a side wall of the support plate 47 and a contact part 59b is provided so as to contact the outer end part 33a of the stator core 33 as shown in Fig. 6. The leaf-spring structure 59 is formed to have a predetermined curvature in a lamination direction to facilitate the lamination work in which the stator core 33 is inserted into the stator frame 13.

As a result, when the lamination process is made in which the stator core 33 is inserted into the stator frame 13, tightness between the stator core 33 and the support plate 47 is increased, so that the gap part 51 is surely closed. Accordingly, in the rotating electric machine 11C according to the third embodiment, the leaf-spring structure 59 blocks the ventilation of the cooling gas flowing through the gap part 51, so that the cooling performance of the rotating electric machine 11C can be maintained at a high level in the rotating electric machine 11C similarly to the first and second embodiments.

In addition, before the process of laminating the stator core 33, when the process of previously installing the leaf-spring structure 59 at the side wall of the support plate 47 is inserted, this contributes increasing in the work efficiency of the lamination process because the process of preparing the flow control part according to the present invention on the way of laminating the stator core 33 can be omitted.

### [Structure of rotating electric machine 11D according to fourth embodiment of present invention]

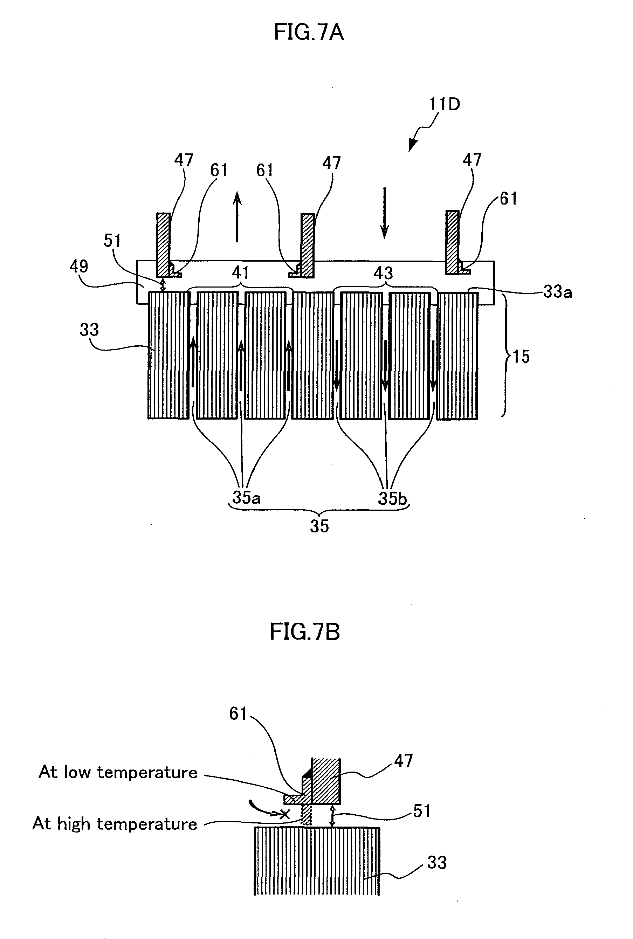

Next, the rotating electric machine 11D according to the fourth embodiment of the present invention will be described below with reference to Figs. 7A and 7B.

Fig. 7A is an elevation cross section view of a flow control structure in the gap part 51 of the rotating electric machine 11D according to the fourth embodiment of the present invention.

Fig. 7B is an enlarged cross section view of a flow control structure in the gap part 51 shown in Fig. 7A.

There are common components between the rotating electric machine 11A according to the first embodiment of the present invention and the rotating electric machine 11D according to the fourth embodiment. The substantially common components between the first and fourth embodiments are designated with the common references, thus descriptions on these components will be omitted, and difference points will be mainly described.

The difference between the rotating electric machine 11A according to the first embodiment (see Fig. 1B) and the rotating electric machine 11D (see Fig. 7A) according to the fourth embodiment is in the structure of the flow control part. More specifically, in the rotating electric machine 11A according to the first embodiment, the brush-form structure 53 is adopted as the flow control part according to the present invention. On the other hand, in the rotating electric machine 11D according to the fourth embodiment, a shape-variation member 61 of which shape varies in accordance with change in a balk temperature is adopted as the flow control part.

The shape-variation member 61 is, for example, a bimetal and a shape-memory alloy. The shape-variation member 61 is provided on a side wall of the support plate 47 as shown in Figs. 7A and 7B. The shape-variation member 61 maintains, as shown in Fig. 7B, an "L-shape" to keep the gap part 51 when the balk temperature is lower than a predetermined value (for example, an ordinary temperature). On the other hand, when the balk temperature exceeds the predetermined value (for example, an exhaust temperature from the stator cooling duct 35), the shape-variation member 61 has a function of changing the shape thereof to close the gap part 51 (from the L-shape to a linear shape in a cross section).

In the rotating electric machine 11 D according to the fourth embodiment, the cooling gas exhausted from the first stator cooling duct 35a in operation is a cooling gas after cooling the stator core 33 and the stator coil 37 (see Fig. 1A) as shown in Fig. 7A. Accordingly, the exhaust temperature of the cooling gas at the first stator cooling duct 35a is higher than an inlet temperature of the cooling gas at the first stator cooling duct 35a.

In this case, the shape-variation member 61 installed within the forward zone 41 changes the shape thereof as a result of reaction with the balk temperature to operate to close the gap part 51. Accordingly, in the rotating electric machine 11D according to the fourth embodiment, the shape-variation member 61 blocks the ventilation of the cooling gas flowing through the gap part 51, so that the cooling performance of the rotating electric machine 11D can be maintained at a high level in the rotating electric machine 11D similarly to the first to third embodiments.

In addition, for example, in the lamination operation of the stator core 33 under the balk temperature which is lower than the normal temperature, the shape-variation member 61 maintains the L-shape to keep the gap part 51. As a result, the gap part 51 can be provided similarly to the conventional art. Accordingly, in the lamination process of the stator core 33 under the balk temperature being lower than the normal temperature, the work efficiency of the laminating the stator core 33 does not deteriorated because it is previously avoided that the stator core 33 interferes with the shape-variation member 61.

### [Structure of a rotating electric machine 11E according to the fifth embodiment of the present invention]

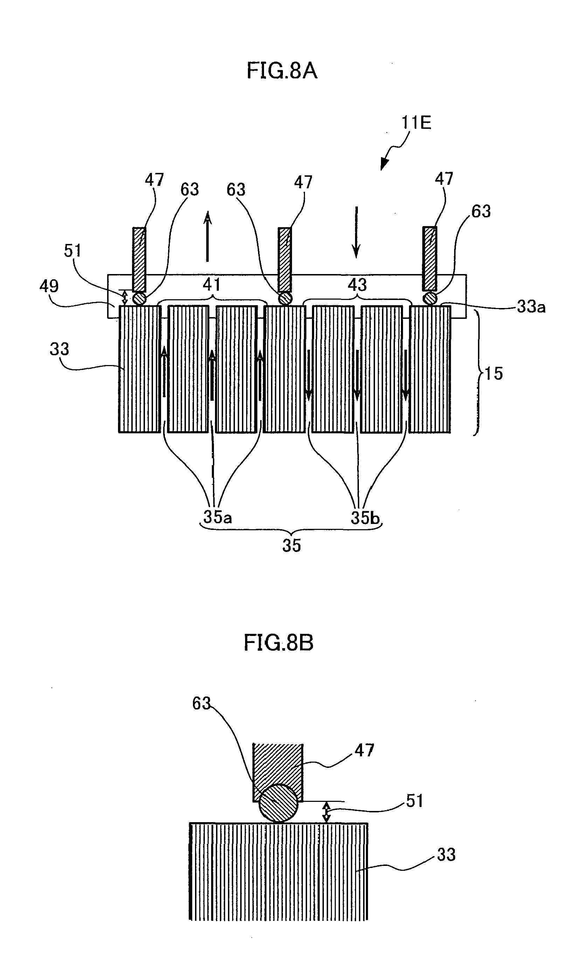

Next, the rotating electric machine 11E according to the fifth embodiment of the present invention will be described below with reference to Figs. 8A and 8B.

Fig. 8A is an elevation cross section view of a flow control structure of the gap part 51 in the rotating electric machine 11E according to a fifth embodiment of the present invention.

Fig. 8B is an enlarged cross section view of the flow control structure in the gap part shown in Fig. 8A.

There are common components between the rotating electric machine 11A according to the first embodiment of the present invention and the rotating electric machine 11E (including a rotating electric machine 11E1 according to a modification of the fifth embodiment). The substantially common components between the first and fifth embodiments are designated with the common references, thus descriptions on these components will be omitted, and difference points will be mainly described.

The difference between the rotating electric machine 11A according to the first embodiment (see Fig. 1B) and the rotating electric machine 11E according to the fifth embodiment is in the structure of the flow control part according to the present invention. More specifically, in the rotating electric machine 11A according to the first embodiment, the brush-form structure 53 is adopted as the flow control part according to the present invention. On the other hand, in the rotating electric machine 11E according to the fifth embodiment, an elastic structure 63 having an electric insulation is adopted as the flow control part.

The elastic structure 63 is, for example, a rubber seal packing having a circular cross section as shown in Fig. 8A. The elastic structure 63 is, as shown in Figs. 8A and 8B, provided so as to close the gap part 51.

Accordingly, in the rotating electric machine 11E according to the fifth embodiment, the elastic structure 63, which is a seal packing made of rubber, blocks the ventilation of the cooling gas through the gap part 51, so that the cooling performance of the rotating electric machine 11E can be maintained at a high level.

In addition, when a rubber seal packing having a circular cross section is adopted as the elastic structure 63, because the seal packing is an elastic member and has a small contact area (line contact) with the stator core 33, this does not decrease the work efficiency in laminating the stator core 33.

### [Structure of rotating electric machine 11E1 according to modification of fifth embodiment of present invention]

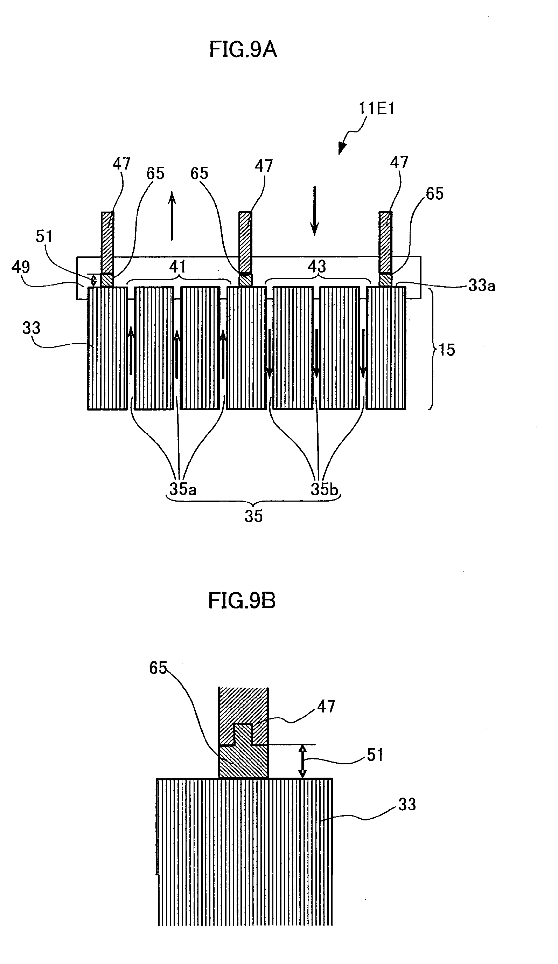

Next, the rotating electric machine 11E1 according to the modification of the fifth embodiment of the present invention will be described below with reference to Figs. 9A and 9B. Fig. 9A is an elevation cross section view of a ventilation suppression structure in the gap part 51 of the rotating electric machine 11E1 according to a modification from the fifth embodiment of the present invention. Fig. 9B is an enlarged view in an elevation cross section illustrating the ventilation suppression structure in the gap part 51 shown in Fig. 9A.

The difference between the rotating electric machine 11E (see Fig. 8A) according to the fifth embodiment and the rotating electric machine 11E1 (see Fig. 9A) according to the modification of the fifth embodiment is in the structure of the flow control part according to the present invention. More specifically, in the rotating electric machine 11E according to the fifth embodiment, the rubber seal packing having a circular cross section is adopted as the elastic structure 63, which is a flow control part according to the present invention. On the other hand, in the rotating electric machine 11E1 according to the modification of the fifth embodiment, a resin seal packing, having a substantially rectangular in cross section, is adopted as an elastic member 65, which is the flow control part according to the present invention.

In other words, between the fifth embodiment and the modification of the fifth embodiment, as characteristics which the ventilation suppressing parts according to the present invention have, there is an agreement in the elastic members having electric insulation, but a different in materials and cross section shapes.

As the resin material of an elastic member 65, for example, a hardening resin or a thermosetting resin can be appropriately used. As described above, when the hardening resin or the thermosetting resin is adopted as the resin material for the elastic structure 65, the work efficiency in lamination for the stator cores 33 can be maintained at a high level.

For example, in a case where the hardening resin is adopted as the resin material of the elastic member 65, the elastic member 65 in laminating process of the stator core 33 is relatively soft just after coating. Accordingly, the work efficiency in lamination for the stator cores 33 can be maintained at the high level. In addition the elastic member 65 made of the hardening resin becomes gradually hard as time has passed from coating. As a result, blocking of the gap part 51 between the stator core 33 and the support plate 47 can be provided.

On the other hand, when the thermosetting resin is adopted as a resin material for the elastic member 65, the elastic structure 65 during the lamination operation of the stator core 33 is relatively soft if the balk temperature is, for example, a normal temperature. Accordingly, the work efficiency in lamination for the stator core 33 can be maintained at the high level. In addition, the elastic member 65 made of the hardening resin becomes gradually hard by the cooling gas having a high temperature exhausted from the forward zone 41 (the first stator cooling duct 35a; see Fig. 9A) during the power generation operation. As a result, blocking of the gap part 51 between the stator core 33 and the support plate 47 can be provided.

According to the rotating electric machine 11E1 of the modification of the fifth embodiment, the elastic member 65, which is a resin seal packing having a substantially rectangular cross section, blocks the ventilation of the cooling gas flowing through the gap part 51, so that the cooling performance of the rotating electric machine 11E1 can be maintained at a high level similarly to the rotating electric machine 11E according to the fifth embodiment.

### [Structure of rotating electric machine 11F according to sixth embodiment of present invention]

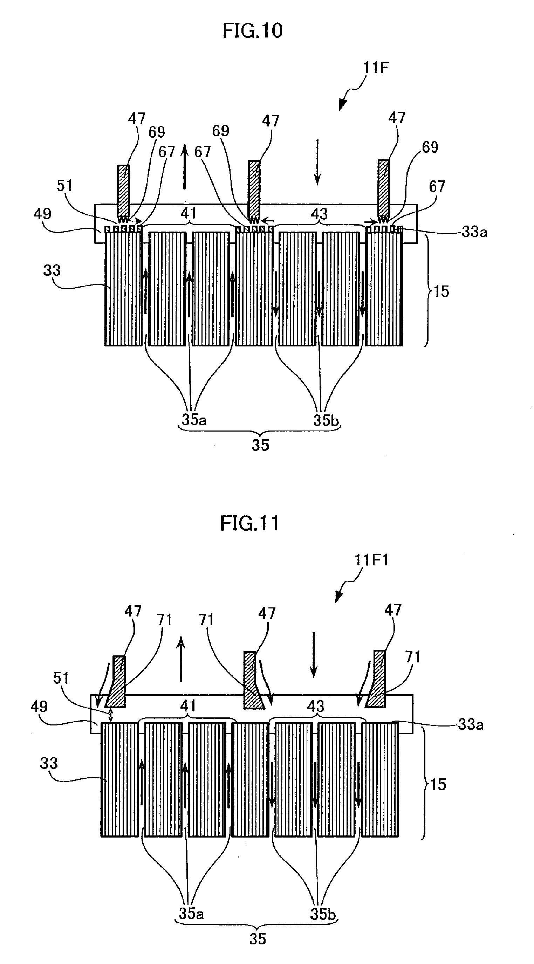

Next, the rotating electric machine 11F according to the sixth embodiment of the present invention will be described below with reference to Fig. 10.

Fig. 10 is an elevation cross section view of the ventilation suppression structure in the gap part 51 of a rotating electric machine 11F according to a sixth embodiment of the present invention.

There are common components between the rotating electric machine 11A according to the first embodiment of the present invention and the rotating electric machine 11F according to the sixth embodiment (including a rotating electric machine 11F1 according to a modification of the sixth embodiment).

Then, the components which are substantially common between the first and sixth embodiments are designated with the common references, and thus descriptions on these components will be omitted, and difference points will be mainly described below.

The difference between the rotating electric machine 11A (see Fig. 1B) according to the first embodiment and the rotating electric machine 11E (see Fig. 10) according to the sixth embodiment is in the structure of the flow control part according to the present invention. More specifically, in the rotating electric machine 11A according to the first embodiment, the brush-form structure 53 is adopted as the flow control part according to the present invention. On the other hand, in the rotating electric machine 11F according to the sixth embodiment, ventilation resistance increasing parts 67, 69 for increasing the ventilation resistance of the cooling gas flowing through the gap part 51 are adopted as the flow control part according to the present invention.

The ventilation resistance increasing part 67 is, for example, an irregularity part having a saw teeth shape in a cross section, in which saw teeth are successively arranged, is provided at (installed on) the outer end part 33a of the stator core 33 as shown in Fig. 10. In addition, the ventilation resistance increase part 69 is, as shown in Fig. 10, provided at the inner end part 47a of the support plate 47, for example, an irregularity part including hollow parts and projections alternately, successively arranged. The ventilation resistance increasing parts 67, 69 are respectively provided on the outer end part 33a of the stator core 33, and the inner end part 47a of the support plate 47 so as to face the gap part 51.

However, an embodiment in which either of the ventilation resistance increasing part 67 or the ventilation resistance increase part 69 is provided on the outer end part 33a of the stator core 33 or the inner end part 47a of the support plate 47 is also included in the technical scope of the present invention.

Generally, when there is the irregularity part on a surface of the structure, a friction loss is increased as compared with the case of the flat plate, so that the ventilation of the cooling gas is suppressed. In the rotating electric machine 11F according to the sixth embodiment, the ventilation resistance increasing parts 67, 69 are provided on the outer end part 33a of the stator core 33 and the inner end part 47a of the support plate 47, respectively, so that the ventilation resistance of the cooling gas flowing through the gap part 51 increases. As a result, a flow rate of the cooling gas flowing through the gap part 51 can be decreased.

In the rotating electric machine 11F according to the sixth embodiment, the flow rate of the cooling gas to the reverse zone 43 can be more increased than the flow rate in the comparative example (not shown) without the ventilation resistance increasing parts 67, 69, so that the cooling performance for the stator 15 and the rotor 17 can be enhanced. In addition, between the outer end part 33a of the stator core 33 and the inner end part 47a of the support plate 47, because there is the gap part 51 having a substantially same size as the conventional art, there is no possibility in that the work efficiency in laminating the stator core 33 is decreased.

Incidentally, as the irregularity part (ventilation resistance increasing part) 67 formed at the outer end part 33a of the stator core 33, for example, a structure may be adopted in which, for example, projections having a rectangular shape are disposed with a mounting means, such as welding, spaced at a predetermined distance along the axial direction.

In place of the above, a structure may be adopted in which the stator cores 33 having a difference in outer diameter sizes are laminated spaced at a predetermined distance in the axial direction. As configured above, the irregularity part (ventilation resistance increasing part) 67 can be formed on the outer end part 33a of the stator core 33 with man-hours of installing new projections omitted.

### [Structure of rotating electric machine 11F1 according to modification of sixth embodiment of present invention]

Next, the rotating electric machine 11F1 according to the modification of the sixth embodiment of the present invention will be described below with reference to Fig. 11. Fig. 11 is an elevation cross section view of a flow control structure in the gap part 51 of the rotating electric machine 11F1 according to a modification from the sixth embodiment of the present invention.

A difference between the rotating electric machine 11F (see Fig. 10) and the rotating electric machine 11F1 according to the modification of the sixth embodiment is in the structure of the flow control part according to the present invention. More specifically, in the rotating electric machine 11F according to the sixth embodiment, as the ventilation resistance increasing parts 67, 69 which are flow control parts according to the present invention, the irregularity part is adopted so as to face the gap part 51 on the outer end part 33a of the stator core 33 and the inner end part 47a of the support plate 47. On the other hand, in a rotating electric machine 11F1 according to the modification of the sixth embodiment, as the ventilation resistance increasing part, which is a flow control part according to the present invention, a ventilation direction deflecting plate 71 is adopted for deflecting the ventilation direction of the cooling gas in the reverse zone (corresponding to a part of "the second flow path" according to the present invention) 43 as the ventilation resistance increasing part 71, which is a flow control part according to the present invention.

In the rotating electric machine 11F1 according to the modification of the sixth embodiment, the ventilation direction deflecting plate 71 is provided integrally with the side wall of the support plate 47 facing the reverse zone 43. The ventilation direction deflecting plate 71 has an inclined face oriented to the axial direction in the reverse zone 43. This deflects the ventilation direction of the cooling gas in the reverse zone 43 is changed to orient to a middle in the axial direction in the reverse zone 43.

In the rotating electric machine 11F1 according to the modification of the sixth embodiment, a flow of which direction is opposite to the flow direction of the cooling gas flowing through the gap part 51 around both ends of the axial direction in the reverse zone 43 by a ventilation direction deflecting function for the cooling gas that the ventilation direction deflecting plate 71 has. Accordingly, the flow rate of the cooling gas passing through the gap part 51 can be decreased.

In the rotating electric machine 11F1 according to the modification of the sixth embodiment, a rate of the cooling gas flowing into the reverse zone 43 can be increased in comparison of the rotating electric machine (not shown) according to the comparative example without the ventilation direction deflecting plate 71, so that the cooling performances of the stator 15 and the rotor 17 can be improved. In addition, between the outer end part 33a of the stator core 33 and the inner end part 47a of the support plate 47, the gap part 51 having substantially the same size as the conventional can be provided, which does not affect on the work efficiency regarding the operation efficiency in lamination of the stator core 33.

### (Other embodiments)

The first to sixth embodiments (including modifications, this will be applied hereafter) practice the present invention. Accordingly, the scope of the present invention should not be interpreted narrower than these embodiments. The present invention can be embodied in various modes without departure from the subject matter and the major characteristics.

For example, a part in each of the structures of the first to sixth embodiments can be replaced with the corresponding part of other embodiments or modifications. In addition, to structures of the embodiments or the modifications a component in other embodiments or the modification can be added. In addition, a part in the structures in the first to sixth embodiments can be omitted as long as a resultant structure is included in the scope of the present invention.

The reference symbols above are listed as follows:

| | |
|---|---|
| 11A | rotating electric machine in the first embodiment |
| 11B | rotating electric machine in the second embodiment |
| 11C | rotating electric machine in the third embodiment |
| 11D | rotating electric machine in the fourth embodiment |
| 11E | the rotating electric machine in the fifth embodiment |
| 11F | rotating electric machine in the sixth embodiment |
| 13 | stator frame |
| 15 | stator |
| 17 | rotor |
| 19 | rotor shaft |
| 21 | axial flow fan |
| 27 | radial flow path |
| 31 | air gap |
| 33 | stator core |
| 35a | first stator cooling duct (corresponding to a part of the first flow path according to the present invention) |
| 35b | second stator cooling duct (corresponding to a part of the second flow path according to the present invention) |
| 41 | forward zone (corresponding to a part of the first flow path according to the present invention) |
| 43 | reverse zone (corresponding to a part of the second flow path according to the present invention) |
| 47 | support plate |
| 49 | connection stick |
| 51 | gap part |
| 53 | brush-form structure (flow control part) |
| 55 | flat-plate-shape structure (flow control part) |
| 57 | projection (flow control part) |
| 59 | leaf-spring structure (flow control part) |
| 61 | shape-variation member (flow control part) |
| 63 | rubber elastic structure |
| 65 | resin elastic structure |
| 67 | irregularity part (ventilation resistance increasing part) |
| 69 | irregularity part (ventilation resistance increasing part) |
| 71 | ventilation direction deflecting plate (ventilation resistance increasing part) |

## Claims

1. A rotating electric machine comprising:
a rotor rotating on an axis;
a stator, disposed apart from the rotor with a gap to surround the rotor, formed by stacking a plurality of perforated-disk-shape stator cores;
a first flow path configured to allow a cooling gas to flow from an inner side of the stator to an outer side of the stator;
a second flow path configured to allow the cooling gas to flow from the outer side of the stator to the inner side of the stator;
a plurality of perforated-disk-shape support plates configured to support the stator and provide a partition in the axial direction between the first flow path and the second flow path; and
a flow control part configured to control ventilation of the cooling gas flowing through a gap part where an outer end part of the stator core and an inner end part of the support plate face each other.

2. The rotating electric machine as claimed in claim 1,
wherein the flow control part comprises a brush-form structure including a mounting part and a contact part; and
wherein the brush-form structure is provided in which the mounting part is fixed to the support plate and the contact part contacts an outer end part of the stator core.

3. The rotating electric machine as claimed in claim 1,
wherein the flow control part comprises a flat-plate-form structure including a mounting part and a contact part, and
wherein the flat-plate-form structure is provided in which the mounting part is fixed to an outer end part of the stator core and the contact part contacts the support plate.

4. The rotating electric machine as claimed in claim 1,
wherein the flow control part comprises a projection on each of a part of the stator cores to have an outer diameter size greater than a predetermined size; and
wherein the projection of the stator core is provided to contact the support plate.

5. The rotating electric machine as claimed in claim 1,
wherein the flow control part comprises a leaf-spring structure including a mounting part and a contact part; and
wherein the leaf-spring structure is provided in which the mounting part is mounted on the support plate and the contact part contacts an outer end part of the stator core.

6. The rotating electric machine as claimed in claim 1,
wherein the flow control part is provided on the support plate and comprises a shape-change structure of which shape is changed in accordance with variation in a balk temperature; and
wherein the shape-change structure varies a shape of the shape-change structure to close the gap part when the balk temperature exceeds a predetermined value.

7. The rotating electric machine as claimed in claim 1,
wherein the flow control part comprises an elastic structure having an electrical insulation; and
wherein the elastic structure is installed to close the gap part.

8. The rotating electric machine as claimed in claim 1,
wherein the flow control part comprises a ventilation resistance increasing part configured to increase a ventilation resistance of the cooling gas flowing through the gap part.

9. The rotating electric machine as claimed in claim 8,
wherein the ventilation resistance increasing part comprises an irregularity part formed on at least one of the outer end part of the stator core and an inner end part of the support plate.

10. The rotating electric machine as claimed in claim 8,
wherein ventilation resistance increasing part comprises a ventilation direction deflecting plate configured to deflect a ventilation direction of the cooling gas in the second flow path to an opposite side of the first flow path; and
wherein the ventilation direction deflecting plate is provided integrally with the support plate.
